# FASCICULE DE BREVET EUROPEEN

(11) **EP 3 597 478 B1**
(45) Date de publication et mention de la délivrance du brevet: **15.12.2021**
(21) Numéro de dépôt: 19185619.4
(22) Date de dépôt: 11.07.2019
(51) Int. Cl.: B60N 3/00

(54) **SIEGE COMPRENANT UNE TABLETTE EXTENSIBLE**
SITZ, DER EIN AUSZIEHBARES BRETTCHEN UMFASST
SEAT COMPRISING AN EXPANDABLE SHELF

(43) Date de publication de la demande: 22.01.2020
(73) Titulaire: RENAULT s.a.s., 92100 Boulogne-Billancourt (FR)
(72) Inventeur: SOARE, Tiberiu-Nicolae, Bucuresti (RO); DAGNICOURT, Blandine, 91470 Forges Les Bains (FR)

(56) Documents cités:
- EP-A1- 1 683 719
- CN-A- 106 882 100
- DE-C1- 19 956 404
- US-A- 2 619 395
- US-A1- 2018 162 253

## Description

### DOMAINE TECHNIQUE AUQUEL SE RAPPORTE L'INVENTION

La présente invention concerne de manière générale le domaine des sièges équipés de tablettes.

Elle concerne plus particulièrement un siège comprenant une assise, un dossier et une tablette extensible, ledit dossier comportant, d'un premier côté, une garniture pour l'adossement d'un occupant dudit siège, ladite tablette extensible étant située d'un deuxième côté dudit dossier et étant montée de façon pivotante par rapport au dossier entre une position escamotée dans laquelle la tablette extensible est rabattue contre le dossier et une position déployée.

### ARRIERE-PLAN TECHNOLOGIQUE

Il est connu d'équiper le dossier d'un siège de véhicule automobile d'une tablette escamotable permettant ainsi aux occupants assis derrière ces sièges de poser des objets sur cette tablette escamotable quand elle est déployée. Des exemples de tablettes sont décrites dans DE19956404C1, US2619395A et EP1683719 A1.

Une telle tablette escamotable est notamment décrite dans le document JP2005075148. Dans ce document, la tablette pivote entre une position déployée, dans laquelle elle est disposée sensiblement à l'horizontale, et une position escamotée, dans laquelle elle est rabattue vers le haut, contre le dossier. La tablette escamotable est de plus extensible, ce qui permet d'y déposer de larges objets, par exemple un ordinateur portable.

L'inconvénient majeur d'une telle tablette escamotable est qu'en cas de choc lorsque celle-ci est en position déployée (par exemple quand le véhicule entre en collision avec un obstacle), la tête de l'occupant du siège arrière risque de percuter la tablette, lui occasionnant des blessures potentiellement lourdes.

### OBJET DE L'INVENTION

Afin de remédier à l'inconvénient précité de l'état de la technique, la présente invention propose un siège tel que défini par la revendication 1.

Un tel siège est avantageux car, quand la tête de l'occupant du siège arrière percute la tablette extensible déployée, celle-ci se rabat naturellement vers l'assise, c'est-à-dire vers le bas (du côté du plancher du véhicule), accompagnant le mouvement de la tête, au lieu de s'opposer à celui-ci comme cela est le cas avec les tablettes extensibles de l'art antérieur. La sécurité de l'occupant du siège arrière est ainsi améliorée car l'énergie emmagasinée par la tête lors de la collision de la tête avec la tablette est diminuée.

D'autres caractéristiques non limitatives et avantageuses du siège conforme à l'invention, prises individuellement ou selon toutes les combinaisons techniquement possibles, sont les suivantes :
- le mécanisme de verrouillage comprend un premier organe fixe par rapport au dossier et un deuxième organe monté pour pivoter par rapport au premier organe à la faveur du pivotement de la tablette extensible par rapport au dossier, l'un des deux organes présente un cran adapté à coopérer avec un ergot de l'autre organe pour bloquer le pivotement du deuxième organe par rapport au premier organe lorsque la tablette extensible est en position déployée, le cran et/ou l'ergot est élastiquement déformable pour se dégager l'un de l'autre lorsque une pression de force supérieure audit seuil est appliquée sur la face supérieure de la tablette extensible,
- la tablette extensible comporte un premier plateau et un mécanisme de pivotement qui relie le premier plateau au dossier par une liaison pivot simple,
- la tablette extensible comprend un deuxième plateau monté sur le premier plateau par une liaison coulissante simple,
- il est prévu une bielle rétractable, qui est montée pivotante à une extrémité par rapport au dossier et à une autre extrémité par rapport au premier plateau et qui présente une longueur pouvant varier,
- la bielle rétractable comprend deux tiges qui sont respectivement montées pivotantes sur le dossier et sur le premier plateau et qui sont assemblées de façon à pouvoir coulisser l'une par rapport à l'autre,
- le dossier comporte une ossature qui comprend deux montants latéraux qui présentent des côtés intérieurs en regard l'un de l'autre et une traverse fixée sur les côtés intérieurs des deux montants latéraux, et le mécanisme de pivotement et la bielle rétractable sont directement fixés sur la traverse,
- le dossier comporte une ossature qui comprend deux montants latéraux qui présentent des côtés intérieurs en regard l'un de l'autre, et le mécanisme de pivotement et la bielle rétractable sont directement fixés sur les côtés intérieurs des montants latéraux,
- il est en outre prévu un appui tête, et la tablette extensible est fixée au dossier à une hauteur plus proche de l'appui tête que de l'assise.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un siège comprenant un dossier équipé d'une tablette extensible conformément à l'invention,
- la figure 2 est une vue schématique en perspective du dossier représenté sur la figure 1, sur laquelle la tablette extensible se trouve en position déployée et étendue,
- la figure 3 est une vue schématique détaillée d'une ossature du dossier équipée d'un premier mode de réalisation de la tablette extensible,
- la figure 4 est une vue schématique éclatée du premier mode de réalisation de la tablette extensible,
- la figure 5 est une vue schématique détaillée de l'ossature du dossier équipée d'un deuxième mode de réalisation de la tablette extensible,
- la figure 6 est une vue schématique éclatée du deuxième mode de réalisation de la tablette extensible.

En préliminaire on notera que les éléments identiques ou similaires des différentes variantes de réalisation de l'invention représentées sur les différentes figures seront, dans la mesure du possible, référencés par les mêmes signes de référence et ne seront pas décrits à chaque fois.

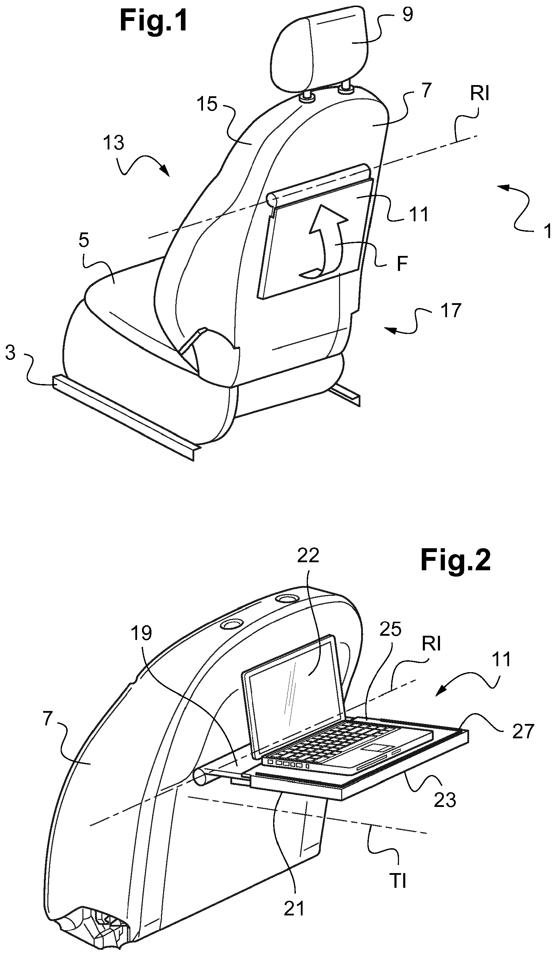

Sur la figure 1, on a représenté un siège 1. Ce siège 1 comporte classiquement une structure porteuse 3 qui supporte une assise 5, un dossier 7, un appui-tête 9 et une tablette extensible 11. La structure porteuse 3 est adaptée à être assemblée au châssis d'un véhicule.

Le véhicule peut être, par exemple, un véhicule automobile, un avion ou bien encore un train.

Dans la description, les termes « avant » et « arrière » seront utilisés par rapport à ce véhicule automobile, l'avant d'un élément désignant le côté de cet élément qui est tourné vers le capot du véhicule et l'arrière désignant le côté de cet élément qui est tourné à l'opposé du capot.

Un tel véhicule comprend au moins deux rangées de sièges 1 situées l'une derrière l'autre, et disposés de sorte que l'assise 5 du siège arrière est tournée vers le dossier 7 du siège avant. Ainsi, l'occupant du siège arrière peut utiliser la tablette extensible 11 du siège avant.

Le dossier 7 de siège comprend, d'un premier côté, ici le côté avant 13, une garniture 15 pour l'adossement de l'occupant du siège 1 et, d'un deuxième côté, ici le côté arrière 17, la tablette extensible 11.

La garniture 15 est une pièce de mousse qui a été expansée à la forme souhaitée grâce à l'usage d'un moule. Bien entendu, en variante, cette garniture 15 pourrait être obtenue d'une façon différente et pourrait être formée d'un matériau différent.

La tablette extensible 11 est montée de façon pivotante par rapport au dossier 7, autour d'un premier axe de rotation R1. La tablette extensible 11 peut ainsi pivoter entre une position escamotée dans laquelle elle est rabattue contre le dossier 7 (de façon à ne pas gêner les occupants du véhicule) et une position déployée dans laquelle des objets peuvent être posés dessus (ces deux positions étant séparées angulairement de plus de 45 degrés, et ici de l'ordre de 90 degrés).

La position rabattue est représentée sur la figure 1 et la position déployée est représentée sur la figure 2. Une flèche F indique le sens de pivotement de la tablette extensible 11 depuis sa position escamotée vers sa position déployée.

La tablette extensible 11 est fixée à une hauteur du dossier 7 plus proche de l'appui-tête 9 que de l'assise 5. A cette hauteur, les genoux de l'occupant du siège arrière ne gênent pas le pivotement de la tablette extensible 11. De plus, en position déployée, la tablette extensible 11 ne gêne pas les genoux de l'occupant du siège arrière.

Le premier axe de rotation R1 est sensiblement parallèle au plancher (non représenté) du véhicule dans lequel est fixé le siège 1. En position déployée, la tablette extensible 11 est sensiblement parallèle au plancher du véhicule dans lequel est fixé le siège 1.

Comme cela est bien visible sur la figure 2, la tablette extensible 11 comprend un premier plateau 19 et un deuxième plateau 21.

Le deuxième plateau 21 est monté avec un seul degré de liberté sur le premier plateau 19. Il est ici monté coulissant sur celui-ci, le long d'un premier axe de translation T1. Ainsi, le deuxième plateau 21 peut se déplacer entre une position étendue, dans laquelle il est éloigné du dossier 7, et une position rangée, dans laquelle il est rapproché du dossier 7.

Des butées évitent que le deuxième plateau 21 puisse s'échapper du premier plateau 19. Elles sont agencées de façon à ce que le deuxième plateau 21 puisse se déplacer sur une distance de l'ordre de 20 cm.

En position étendue, la tablette extensible 11 est ainsi adaptée à accueillir des objets 22 de grandes dimensions, par exemple un ordinateur portable 22.

La tablette extensible 11 est équipée d'un mécanisme de blocage (non représenté) permettant de maintenir le deuxième plateau 21 en position étendue ou en position rangée. Il peut s'agir de moyens de clipsage provisoire.

Le deuxième plateau 21 de la tablette extensible 11 présente une face inférieure 23 orientée vers l'assise et une face supérieure 25 orientée à l'opposée de la face inférieure 23.

Comme le montre la figure 2, il présente un rebord 27 faisant saillie de la face supérieure 25 sur au moins une partie du contour du deuxième plateau 21. Le rebord 27 permet de retenir des objets 22 posés sur la face supérieure de la tablette extensible 11.

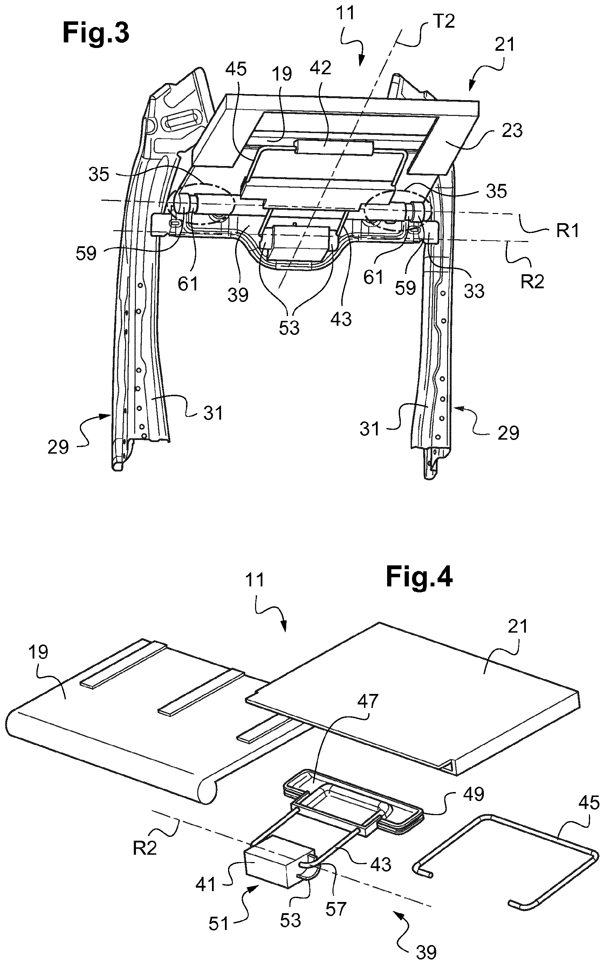

Sur la figure 3, on représenté plus en détail un premier mode de réalisation de la tablette extensible 11.

Dans ce premier mode de réalisation, le premier plateau 19 présente une forme de plaque. Le deuxième plateau 21 présente des parois configurées pour envelopper au moins partiellement le premier plateau 19 à la façon d'un fourreau.

Les parois du deuxième plateau 21 lui permettent ainsi de coulisser sur le premier plateau 19 le long du premier axe de translation T1.

Le dossier comprend une ossature qui comporte deux montants latéraux 29. Les deux montants latéraux 29 présentent des côtés intérieurs 31 en regard l'un de l'autre.

Dans ce premier mode de réalisation, une traverse 33 est fixée aux côtés intérieurs 31 des deux montants latéraux 29.

La tablette extensible 11 comprend un mécanisme de pivotement 35 permettant d'articuler le premier plateau 19 sur la traverse 33. Le mécanisme de pivotement 35 comprend par exemple deux gonds 59 définissant le premier axe de rotation R1.

En fixant la tablette extensible 11 et la traverse entre les côtés intérieurs 31 des montants latéraux 29, on permet aux airbags latéraux (c'est-à-dire aux airbags se déployant depuis les côtés du dossier) de se déployer sans interférence avec ladite tablette extensible 11. Ainsi, la sécurité de l'occupant du siège arrière est améliorée.

La tablette extensible 11 est en outre équipée d'une bielle rétractable 39 lui permettant de supporter des objets lourds.

La bielle rétractable 39 est montée pivotante, à une de ses extrémités, par rapport au dossier 7 et, à une autre de ses extrémités, par rapport au premier plateau 19. La bielle rétractable 39 présente une longueur pouvant varier.

A cet effet, comme le montre la figure 4, la bielle rétractable 39 comprend deux tiges 43, 45 qui sont respectivement montées pivotantes par rapport au dossier 7 et au premier plateau 19 et qui sont assemblées de façon à pouvoir coulisser l'une par rapport à l'autre.

Plus précisément, comme cela est bien visible sur la figure 4, les deux tiges 43, 45 sont recourbées de façon à présenter sensiblement des formes de U, avec une base rectiligne et deux bras dont les extrémités libres sont recourbées l'une vers l'autre.

L'une des tiges, appelée tige proximale 43, est située du côté du dossier 7 tandis que l'autre des tiges, appelée tige distale 45, est située du côté opposé.

Les extrémités recourbées de la tige proximale 43 forment une extrémité de la bielle rétractable 39. Elles sont engagées dans des ouvertures d'une pièce de fixation 41, de façon à ce que la tige proximale 43 puisse pivoter autour d'un deuxième axe de rotation R2 par rapport à cette pièce de fixation 41. Le deuxième axe de rotation R2 est parallèle au premier axe de rotation R1 et distinct de celui-ci.

La pièce de fixation 41 est adaptée à être fixée à la traverse 33, par exemple par des vis.

La base du U de la tige proximale 43 est montée fixement sur une pièce intermédiaire 47.

Les bras de la tige distale 45 sont montés coulissants dans des glissières 49 ménagées dans la pièce intermédiaire 47. Ainsi, les deux tiges 43, 45 sont assemblées de façon à pouvoir coulisser l'une par rapport à l'autre selon un deuxième axe de translation T2.

La course de la tige distale 45 dans les glissières 49 est limitée, d'un côté, par ses extrémités recourbées, et, de l'autre, par sa base. Le coulissement des deux tiges 43, 45 l'une par rapport à l'autre confère à la bielle rétractable 39 sa longueur variable.

Les deux tiges 43, 45 sont par exemple métalliques. La pièce intermédiaire 47 est par exemple fabriquée en métal ou en matière plastique rigide.

Une telle bielle rétractable 39 formée de deux tiges 43, 45 courtes assemblées par la pièce intermédiaire 47 présente une rigidité élevée, ce qui lui permet de supporter des efforts de plusieurs kilogrammes.

Comme cela est visible sur la figure 3, la base du U de la tige distale 45 forme l'autre extrémité de la bielle rétractable 39 et est encliquetée dans un crochet 42 porté par la face inférieure du premier plateau 19 de façon à pouvoir pivoter dans ce crochet 42.

La longueur variable de la bielle rétractable 39 lui permet d'accompagner le pivotement de la tablette extensible 11 autour du premier axe de rotation R1 sans l'entraver.

La tablette extensible 11 est en outre équipée d'un mécanisme de verrouillage 51 adapté à la maintenir en position déployée. Le mécanisme de verrouillage 51 est adapté à être déverrouillé par application d'une pression sur la face supérieure 25 de la tablette extensible 11 avec une force supérieure à un seuil déterminé.

Le seuil est choisi de façon à permettre à la tablette extensible 11 de porter une masse de plusieurs kilogrammes (correspondant par exemple à la masse d'un ordinateur portable 22).

Le seuil est en outre choisi de façon à permettre l'escamotage de la tablette extensible 11 quand la tête de l'occupant du siège arrière la percute (par exemple quand le véhicule entre en collision avec un obstacle).

Enfin, le seuil est choisi de façon à permettre à un adulte d'escamoter la tablette extensible 11 par application volontaire d'une pression sur la face supérieure 25.

Le seuil est de préférence compris entre 2 décaNewton (daN) et 30 daN. Il est par exemple de 15 daN.

Ce mécanisme de verrouillage pourrait être formé par un revêtement prévu sur les glissières 49 de façon à créer des frottements suffisants pour maintenir la tablette escamotable en position déployée.

Toutefois, ici le mécanisme de verrouillage 51 comprend un premier organe 53 fixe par rapport au dossier 7, qui est adapté à coopérer avec un deuxième organe, en l'espèce la tige proximale 43.

Dans le premier mode de réalisation illustré sur les figures 3 et 4, le premier organe 53 est porté par la pièce de fixation 41 de la bielle rétractable 39. Plus précisément, la pièce de fixation 41 présente une forme parallélépipédique et elle porte deux premiers organes 53 (seul un premier organe 53 est visible sur la figure 3). Chaque premier organe 53 présente une forme de demi-tube s'élevant à partir de l'un des côtés de la pièce de fixation 41. Le bord d'extrémité libre de chaque demi-tube présente un cran 57.

Les bras de la tige proximale 43 sont prévus pour s'appuyer sur les bords d'extrémité de ces premiers organes 53. Ils sont plus précisément prévus pour être rappelés élastiquement en appui contre ces bords d'extrémité de façon à les prendre en sandwich.

Chaque bras de la tige proximale 43 est donc adapté à naviguer contre le bord d'extrémité de l'un des premiers organes 53 lorsque la tablette extensible 11 bascule vers sa position déployée, à la manière de deux ergots naviguant sur une came. Lorsque la tablette extensible 11 atteint cette position déployée, les bras de la tige proximale 43 s'engagent dans les crans 57, de telle sorte qu'ils s'y trouvent bloqués tant qu'aucun effort extérieur n'est exercé sur la tablette extensible 11.

Les crans 57 sont disposés de sorte que la tablette extensible 11 soit sensiblement parallèle au plancher du véhicule quand les bras de la tige proximale 43 sont bloqués dans les crans 57.

En appliquant une pression de force supérieure au seuil précité sur la face supérieure 25 du second plateau 21 de la tablette extensible 11, les bras de la tige proximale 43 sont prévus pour se déformer élastiquement et se désengager des crans 57.

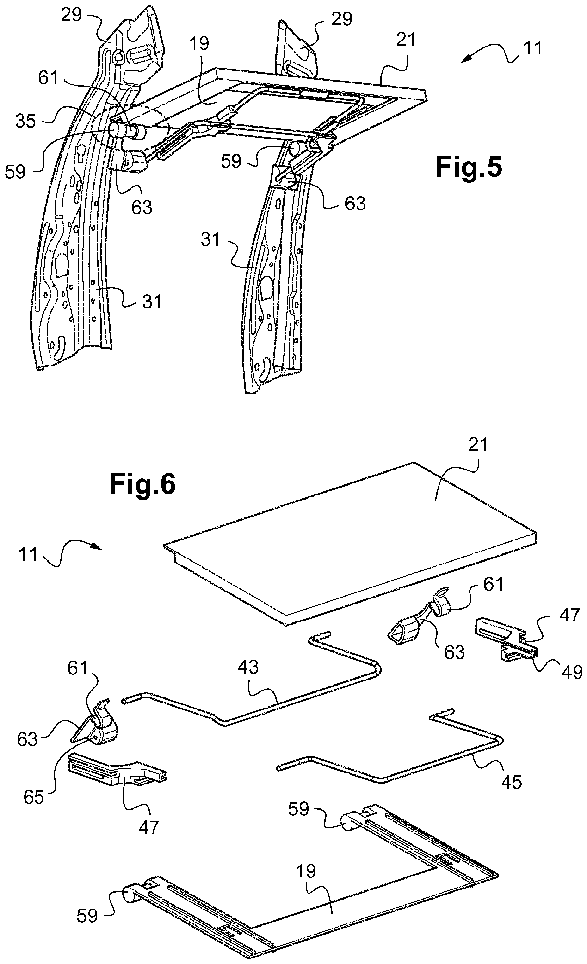

Sur la figure 5, on a représenté un deuxième mode de réalisation de la tablette extensible 11.

Dans ce deuxième mode de réalisation, le mécanisme de pivotement 35 et la bielle rétractable 39 sont directement fixés aux côtés intérieurs 31 des montants latéraux 29. Par « directement », on entend qu'ils y sont fixés sans utiliser de pièce reliant les deux montants latéraux 29.

A cet effet, le premier plateau présente ici une forme en U dont les extrémités des bras forment des gonds 59, lesquels les gonds sont directement fixés aux côtés intérieurs 31 des montants latéraux 29 au moyen de pièces de fixation 63.

Comme cela est bien visible sur la figure 6, les deux pièces de fixation 63 comprennent des parties supérieures 61 en forme de ponts qui viennent entourer les gonds 59 et des parties inférieures 65 qui délimitent des ouvertures d'accueil des extrémités recourbées de la tige proximale 43. Ces pièces de fixation 63 sont par exemple vissées ou soudées sur les montants latéraux 29.

Dans ce mode, les extrémités des tiges proximale 43 et distale 45 sont recourbées à l'opposée l'une de l'autre.

Ces deux tiges sont montées coulissantes l'une sur l'autre en utilisant cette fois deux pièces intermédiaires 47 distinctes, qui délimitent chacune une partie de fixation à la tige proximale 43 et une glissière 49 pour le montage coulissant de l'un des bras de la tige distale 45.

Dans ce deuxième mode de réalisation, le mécanisme de verrouillage 51 est disposé au niveau des parties supérieures 61 en forme de ponts des pièces de fixation 63. Ainsi les gonds 59 du mécanisme de pivotement 35 présentent chacun un ergot (non visible). Les parties supérieures des pièces de fixation 63 présentent chacune un cran (non visible) coopérant avec un des ergots.

## Revendications

1. Siège (1) comprenant une assise (5), un dossier (7) et une tablette extensible (11), ledit dossier (7) comportant, d'un premier côté (13), une garniture (15) pour l'adossement d'un occupant dudit siège (1), ladite tablette extensible (11) étant située d'un deuxième côté (17) dudit dossier (7) et étant montée de façon pivotante par rapport au dossier (7) entre une position escamotée dans laquelle la tablette extensible (11) est rabattue contre le dossier (7) et une position déployée, dans lequel, en position escamotée, la tablette extensible (11) est rabattue vers l'assise (5), la tablette extensible (11) présentant une face inférieure (23) orientée vers l'assise (5) et une face supérieure (25) orientée à l'opposé de la face inférieure (23), **caractérisé en ce que** la tablette extensible (11) est équipée d'un mécanisme de verrouillage (51) adapté à maintenir ladite tablette extensible (11) dans la position déployée, le mécanisme de verrouillage (51) étant adapté à être déverrouillé par application d'une pression sur la face supérieure (25) de la tablette extensible (11) avec une force supérieure à un seuil.

2. Siège (1) selon la revendication 1, dans lequel le mécanisme de verrouillage (51) comprend un premier organe (53) fixe par rapport au dossier (7) et un deuxième organe (55) monté pour pivoter par rapport au premier organe (53) à la faveur du pivotement de la tablette extensible (11) par rapport au dossier (7), l'un des deux organes (53, 55) présentant un cran (57) adapté à coopérer avec un ergot (43) de l'autre organe pour bloquer le pivotement du deuxième organe (55) par rapport au premier organe (53) lorsque la tablette extensible (11) est en position déployée, le cran (57) et/ou l'ergot (43) étant élastiquement déformable pour se dégager l'un de l'autre lorsque une pression de force supérieure audit seuil est appliquée sur la face supérieure (25) de la tablette extensible (11).

3. Siège (1) selon l'une des revendications 1 et 2, dans lequel la tablette extensible (11) comporte un premier plateau (19) et un mécanisme de pivotement (35) qui relie le premier plateau (19) au dossier (7) par une liaison pivot simple.

4. Siège (1) selon la revendication 3, dans lequel la tablette extensible (11) comprend un deuxième plateau (21) monté sur le premier plateau (19) par une liaison coulissante simple.

5. Siège (1) selon l'une des revendications 1 à 4, dans lequel il est prévu une bielle rétractable (39), qui est montée pivotante à une première de ses extrémités par rapport au dossier (7) et à une autre de ses extrémités par rapport au premier plateau (19) et qui présente une longueur pouvant varier.

6. Siège (1) selon la revendication 5, dans lequel la bielle rétractable (39) comprend deux tiges (43, 45) qui sont respectivement montées pivotantes par rapport au dossier (7) et au premier plateau (19) et qui sont assemblées de façon à pouvoir coulisser l'une par rapport à l'autre.

7. Siège (1) selon l'une des revendications 5 et 6 prise en combinaison avec la revendication 3, dans lequel le dossier (7) comporte une ossature qui comprend deux montants latéraux (29) présentant des côtés intérieurs (31) en regard l'un de l'autre, et une traverse (33) fixée sur les côtés intérieurs (31) des deux montants latéraux (29), et dans lequel le mécanisme de pivotement (35) et la bielle rétractable (39) sont directement fixés sur la traverse (33).

8. Siège (1) selon l'une des revendications 5 et 6 prise en combinaison avec la revendication 3, dans lequel le dossier (7) comporte une ossature qui comprend deux montants latéraux (29) présentant des côtés intérieurs (31) en regard l'un de l'autre, et dans lequel le mécanisme de pivotement (35) et la bielle rétractable (39) sont directement fixés sur les côtés intérieurs (31) des montants latéraux (29).

9. Siège (1) selon l'une des revendications 1 à 8, dans lequel il est en outre prévu un appui-tête (9), et dans lequel la tablette extensible (11) est fixée au dossier (7) à une hauteur plus proche de l'appui-tête (9) que de l'assise (5).

## Patentansprüche

1. Sitz (1), umfassend eine Sitzfläche (5), eine Rückenlehne (7) und eine herausziehbare Ablage (11), wobei die Rückenlehne (7) an einer ersten Seite (13) eine Polsterung (15) aufweist, damit sich eine auf dem Sitz (1) sitzende Person anlehnen kann, wobei die herausziehbare Ablage (11) an einer zweiten Seite (17) der Rückenlehne (7) angeordnet und bezüglich der Rückenlehne (7) zwischen einer eingezogenen Position, in der die herausziehbare Ablage (11) an die Rückenlehne (7) eingeklappt ist, und einer ausgebrachten Position schwenkend montiert ist, wobei die herausziehbare Ablage (11) in der eingezogenen Position zu der Sitzfläche (5) hin eingeklappt ist, wobei die herausziehbare Ablage (11) eine auf die Sitzfläche (5) ausgerichtete untere Fläche (23) und eine der unteren Fläche (23) entgegengesetzt ausgerichtete obere Fläche (25) aufweist, **dadurch gekennzeichnet, dass** die herausziehbare Ablage (11) mit einem Verriegelungsmechanismus (51) versehen ist, der dazu ausgeführt ist, die herausziehbare Ablage (11) in der ausgebrachten Position zu halten, wobei der Verriegelungsmechanismus (51) dazu ausgeführt ist, durch Druckbeaufschlagung der oberen Fläche (25) der herausziehbaren Ablage (11) mit einer über einer Schwelle liegenden Kraft entriegelt zu werden.

2. Sitz (1) nach Anspruch 1, wobei der Verriegelungsmechanismus (51) ein erstes bezüglich der Rückenlehne (7) feststehendes Glied (53) und ein zweites Glied (55) umfasst, das dank des Schwenkens der herausziehbaren Ablage (11) bezüglich der Rückenlehne (7) zum Schwenken bezüglich des ersten Glieds (53) montiert ist, wobei eines der beiden Glieder (53, 55) eine Raste (57) aufweist, die zum Zusammenwirken mit einem Zapfen (43) des anderen Glieds ausgeführt ist, um das Schwenken des zweiten Glieds (55) bezüglich des ersten Glieds (53) zu blockieren, wenn die herausziehbare Ablage (11) in der ausgebrachten Position ist, wobei die Raste (57) und/oder der Zapfen (43) elastisch deformierbar sind, um auseinander auszurücken, wenn eine über der Schwelle liegende Druckkraft auf die obere Fläche (25) der herausziehbaren Ablage (11) ausgeübt wird.

3. Sitz (1) nach einem der vorhergehenden Ansprüche 1 und 2, wobei die herausziehbare Ablage (11) eine erste Platte (19) und einen Schwenkmechanismus (35) aufweist, der die erste Platte (19) über eine einfache Schwenkverbindung mit der Rückenlehne (7) verbindet.

4. Sitz (1) nach Anspruch 3, wobei die herausziehbare Ablage (11) eine zweite Platte (21) umfasst, die über eine einfache Schiebeverbindung an der ersten Platte (19) montiert ist.

5. Sitz (1) nach einem der Ansprüche 1 bis 4, wobei eine zurückziehbare Koppel (39) vorgesehen ist, die an einem ersten ihrer Enden schwenkend bezüglich der Rückenlehne (7) und an einem anderen ihrer Enden bezüglich der ersten Platte (19) montiert ist und die eine Länge aufweist, die variieren kann.

6. Sitz (1) nach Anspruch 5, wobei die zurückziehbare Koppel (39) zwei Stangen (43, 45) umfasst, die schwenkend bezüglich der Rückenlehne (7) beziehungsweise der ersten Platte (19) montiert und so zusammengebaut sind, dass sie bezüglich einander gleiten können.

7. Sitz (1) nach einem der Ansprüche 5 und 6 in Kombination mit Anspruch 3, wobei die Rückenlehne (7) ein Gerüst aufweist, das zwei seitliche Holme (29), die einander gegenüberliegende Innenseiten (31) aufweisen, und eine Querstrebe (33) aufweist, die an den Innenseiten (31) der beiden seitlichen Holme (29) befestigt sind, und wobei der Schwenkmechanismus (35) und die zurückziehbare Koppel (39) direkt an der Querstrebe (33) befestigt sind.

8. Sitz (1) nach einem der Ansprüche 5 und 6 in Kombination mit Anspruch 3, wobei die Rückenlehne (7) ein Gerüst aufweist, das zwei seitliche Holme (29) aufweist, die einander gegenüberliegende Innenseiten (31) aufweisen, und wobei der Schwenkmechanismus (35) und die zurückziehbare Koppel (39) direkt an den Innenseiten (31) der seitlichen Holme (29) befestigt sind.

9. Sitz (1) nach einem der Ansprüche 1 bis 8, wobei ferner eine Kopfstütze (9) vorgesehen ist und wobei die herausziehbare Ablage (11) auf einer Höhe an der Rückenlehne (7) befestigt ist, die der Kopfstütze (9) näher als der Sitzfläche (5) ist.

## Claims

1. Seat (1) comprising a seat pan (5), a backrest (7) and an extendable shelf (11), said backrest (7) comprising, on a first side (13), a padding (15) for an occupant of said seat (1) to rest their back against, said extendable shelf (11) being located on a second side (17) of said backrest (7) and being mounted so as to be able to pivot relative to the backrest (7) between a stowed position in which the extendable shelf (11) is folded down against the backrest (7) and a deployed position in which, in the stowed position, the extendable shelf (11) is folded down towards the seat pan (5), the extendable shelf (11) having a lower face (23) oriented towards the seat (5) and an upper face (25) oriented in the opposite direction from the lower face (23), **characterized in that** the extendable shelf (11) is equipped with a locking mechanism (51) that is able to hold said extendable shelf (11) in the deployed position, the locking mechanism (51) being able to be unlocked by application of pressure on the upper face (25) of the extendable shelf (11), with a force greater than a threshold.

2. Seat (1) according to Claim 1, wherein the locking mechanism (51) comprises a first member (53) that is fixed relative to the backrest (7) and a second member (55) that is mounted so as to be able to pivot relative to the first member (53) so as to allow the extendable shelf (11) to pivot relative to the backrest (7), one of the two members (53, 55) having a notch (57) that is designed to cooperate with a spur (43) of the other member so as to prevent the second member (55) from pivoting relative to the first member (53) when the extendable shelf (11) is in the deployed position, the notch (57) and/or the spur (43) being elastically deformable so as to separate from one another when a pressure of force greater than said threshold is applied to the upper face (25) of the extendable shelf (11).

3. Seat (1) according to either of Claims 1 and 2, wherein the extendable shelf (11) comprises a first tray (19) and a pivot mechanism (35) that connects the first tray (19) to the backrest (9) by a simple pivot connection.

4. Seat (1) according to Claim 3, wherein the extendable shelf (11) comprises a second tray (21) mounted on the first tray (19) by means of a simple sliding connection.

5. Seat (1) according to one of Claims 1 to 4, wherein there is provided a retractable connecting rod (39) which is mounted so as to be able to pivot at a first of its ends relative to the backrest (7) and at another of its ends relative to the first tray (19), and which has a length that can vary.

6. Seat (1) according to 5, wherein the retractable connecting rod (39) comprises two stems (43, 45) which are respectively mounted so as to be able to pivot relative to the backrest (7) and relative to the first tray (19) and which are assembled so as to be able to slide with respect to one another.

7. Seat (1) according to either of Claims 5 and 6 considered in combination with Claim 3, wherein the backrest (7) comprises a frame which comprises two lateral uprights (29) having mutually facing inner sides (31), and a crossmember (33) attached to the inner sides (31) of the two lateral uprights (29), and wherein the pivot mechanism (35) and the retractable connecting rod (39) are directly attached to the crossmember (31).

8. Seat (1) according to either of Claims 5 and 6 considered in combination with Claim 3, wherein the backrest (7) comprises a frame which comprises two lateral uprights (29) having mutually facing inner sides (31), and wherein the pivot mechanism (35) and the retractable connecting rod (39) are directly attached to the inner sides (31) of the lateral uprights (29).

9. Seat (1) according to one of Claims 1 to 8, wherein there is also provided a headrest (9), and wherein the extendable shelf (11) is attached to the backrest (7) at a height that is closer to the headrest (9) than to the seat pan (5).
